# EUROPEAN PATENT SPECIFICATION

(11) **EP 0 307 548 B1**
(45) Date of publication and mention of the grant of the patent: **07.09.1994**
(21) Application number: 88109351.2
(22) Date of filing: 18.10.1985
(51) Int. Cl.: C01B 33/34, C01B 33/20

(54) **A process for manufacturing organoclays having enhanced gelling properties**
Verfahren zur Herstellung von Organotonen mit verbesserten Gel-Bildungseigenschaften
Procédé de fabrication d'organoargiles à propriétés gélifiantes

(43) Date of publication of application: 22.03.1989
(62) Divisional of application: 85307548.9
(73) Proprietor: SOUTHERN CLAY PRODUCTS, INC., Gonzales, TX 78629 (US)
(72) Inventor: Jones, Thomas Richard, St. Austell Cornwall PL25 4BJ (GB); Knudson, Milburn I, Gonzales, Texas 78629 (US)
(74) Representative: Green, Mark Charles

(56) References cited:
- DE-A- 3 304 969
- FR-A- 2 226 360
- US-A- 2 173 975
- US-A- 3 951 850
- US-A- 4 371 626
- US-A- 4 469 639

## Description

This is a divisional application of European Patent Application No 85307548.9 (0220356).

This invention relates generally to organophilic clays (hereinafter referred to as "organoclays"), and more specifically relates to an improved process for manufacture of same, which process strikingly enhances the gelling properties of the said products.

Organoclays, representing the reaction product of a smectite-type clay with a higher alkyl-containing quaternary ammonium compound, have long been known for use in gelling of organic liquids such as lubricating oils, linseed oil, toluene and the like. A large variety of highly useful products, such as lubricating greases are producible through use of such gelling agents. The procedures and chemical reactions pursuant to which these organoclays are prepared, are well-known. Thus, under appropriate conditions, the organic compound which contains a cation, will react by ion exchange with clays which contain a negative layer lattice and exchangeable cations to form the organoclay products. If the organic cation contains at least one alkyl group containing at least 10 carbon atoms, then the resultant organoclays will have the property of swelling in certain organic liquids.

Among the prior art patents which discuss at length aspects of the preparation and properties of organoclays, as above outlined, are U.S. Patents No. 2,531,427; 2,966,506; 3,974,125; 3,537,994; and 4,081,496. Reference may also be had to applicable portions of the standard reference work "Clay Mineralogy", 2nd Edition, 1968, by Ralph E. Grim, McGraw Hill Book Company.

In the usual procedure for preparing an organophilic clay pursuant to this prior art, the smectitie-type clay, a selected quaternary compound and water are mixed together, preferably at an elevated temperature, typically in the range of 100°F (38°C) to 180°F (82°C) for a period of time sufficient for the organic quaternary ammonium compound to coat the clay particles. Thereafter, the product can be filtered, washed, dried and ground, or otherwise processed, depending upon the intended use. In some instances, for example, the drying and grinding step may be omitted. Various other modifications of this process may be used depending upon the form of product desired -- as will be noted in the referenced patents.

Now in accordance with the present invention, it has unexpectedly been discovered that the known process for manufacture of an organoclay, wherein a smectite-type clay is reacted with a higher alkyl-containing quaternary ammonium compound, may be improved to yield striking enhancement of the gelling properties of the resultant organoclay product, by initially dispesing the clay in water at less than 10% solids, screening and centrifuging the clay to remove non-clay components, and by subjecting the resulting clay slurry to high speed fluid shear as a pumpable slurry prior to said reaction thereof with said ammonium compound by passing the slurry through a narrow gap defined between the stator and rotor of a dispersion mill, the rotor being rotated at a high speed with respect to the stator and the slurry being subjected to shearing forces in at least the gap between the stator and rotor.

The high speed fluid shear is effected, pursuant to the invention, by use of a dispersion or colloid mill, based upon a stator and a closely spaced rotor, wherein a high speed rotation is maintained between the two said elements. The slurry in this instance is subjected to the high speed fluid shear by being passed through the gap between the stator and rotor. The well-known Greer mill is one example of this type of construction, and may be utilized as one instrument in the practice of the present invention. In the said Greer mill a narrow gap is defined by a stationary stator and a rotor which rotates within the vertically surrounding stator. The slurry to be treated in accordance with the invention is passed through that gap under pressure.

Further instruments useful in effecting high speed fluid shear employing a stator/rotor arrangement are discussed at pages 842 and 843 of "Chemical Engineers Handbook", edited by R. H. Perry and C. H. Chilton, 5th Edition, 1973, McGraw Hill Book Company (New York).

The precise manner in which the high energy treatment in accordance with the invention acts to enable the remarkable improvements in gelling properties is not fully understood. Among other things, however, it has been found that such treatment has a marked effect on the average particle size of the clay, leading to substantial average particle size reduction.

The smectite-type clays which are subjected to the improved process of this invention, are precisely those which have been conventionally utilized in the prior art in the preparation of organoclays as aforementioned. These are smectite-type clays which have a cation exchange capacity of at least 75 milliequivalents per 100 grams of clay. Useful clays for such purposes include the naturally occurring Wyoming variety of swelling bentonite and similar clays, and hectorite, which is a swelling magnesium-lithium silicate clay. The clays are preferably converted to the sodium form if they are not already in this form. This can be effected, again as is known in the art, by a cation exchange reaction, or the clay can be converted via an aqueous reaction with a soluble sodium compound.

Smectite-type clays prepared synthetically can also be utilized, such as montmorillonite, bentonite, beidelite, hectorite-saponite, and stevensite.

In the invention, the crude smectite-type clay, as for example a bentonite, is initially dispersed in water at relatively low solids, i.e. less than 10% by weight. The slurry is then screened and centrifuged to remove non-clay components and especially abrasive elements such as quartz. Removal of these abrasive elements is especially preferred if the slurry is thereupon to be subjected to shearing forces as by passing through a narrow gap. Were such abrasives present, the orifice channel and attendant portions of the mill would rapidly become damaged.

The fine fraction from the centrifuge, which typically includes 4 to 5% solids, is then subjected to high speed fluid shear in accordance with the present invention. The output clay product from the high speed fluid shear step is then subjected to the conventional reaction with the quaternary amine.

The reaction of the high speed fluid-sheared clay with the amine is effected by the conventional procedures described at great length in the prior art, including in the previously mentioned patents.

The organic compounds which are reacted with the treated clay are quaternary ammonium salts, where the salt anion is preferably chloride or bromide or mixtures thereof; and is more preferably chloride ion. The salt anion may also, however, be nitrate, hydroxyl, acetate, or mixtures of these, Any of such compounds as are known to be useful in producing organoclay gellants of the type herein discussed may be used in this aspect of the invention, specifically including the compounds so reported useful in the patents heretofore cited. Among others these include dimethyl di(hydrogenated tallow), dimethyl benzyl hydrogenated tallow, dibenzyl dialkyl, methyl benzyl dialkyl, and trimethyl hydrogenated tallow salts.

Pursuant to the improvements yielded by the invention, the gelling characteristics, i.e. the gelling efficiency of the clays treated by the invention, are so markedly enhanced, as to make possible use of quantities of the gelling agent to achieve a given result, which are reduced in comparison to the amount which would be required in the absence of the invention. Further clays, such as certain deposits of bentonite-type clays which heretofore had been considered unacceptable as crude materials for use in preparing suitable gellants, are found when treated by the precess of the invention, to yield organoclay gelling agents which are fully acceptable for use in gelling organic liquids or the like. A net effect of the invention in this regard, is therefore to enable highly effective use of crude deposits previously deemed unusable for these purposes, thereby vastly expanding the possible sources of raw materials which can be used to produce the final gellant products.

For a better understanding of the present invention and to show how the same may be carried into effect, reference will now be made, by way of example, to the accompanying figures in which:
Figure 1 is a graph comparing the effects of gelling a diesel fuel with an organoclay prepared by the process of the invention, with an organoclay which has been conventionally processed; and
Figure 2 is a graph similar to Figure 1 and illustrating the comparative results achieved where an organoclay in accordance with the invention, and a control untreated organoclay, are each used in the gelling of odorless mineral spirits.

The invention will now be illustrated by a series of Examples, which are intended to set forth typical and preferred procedures which may be utilized in the practice of the present invention.

### EXAMPLE 1

In this Example, the smectite-type clay utilized as a starting material was a refined bentonite. The crude bentonite was initially dispersed in water at 7% solids by weight. The slurry was thereupon screened, and then centrifuged to remove non-clay components and especially abrasive elements such as quartz. The fine fraction from the centrifuge, which then included approximately 4 to 5% solids by weight, was divided into two portions. One such portion served as a control sample. The second portion, in accordance with the invention, was subjected to high speed fluid shear by being passed through a Greer mixer, which is a well-known dispersion mill of the rotor/stator type. In this procedure, the slurry was mixed in the Greer for a minimum of 5 minutes at maximum speed, 8500 rpm. The control and the sheared samples, were each divided into further portions, which were reacted with the salt of a dimethyl di(hydrogenated tallow) amine. The ratio of amine to clay was varied in the samples from 85 to 105 milliequivalents per 100 grams of clay on a 100% active clay basis. The amine was stirred into the approximately 4 to 5% solids slurry at 60°C, with stirring being continued for approximately 1/2 hour, after which the material was filtered, washed with water and dried at 60°C. The dried material was pulverised with a Mikropul mill to approximately 95% less than 200 mesh. Tests were then conducted to determine the gelling properties of each of the control and invention samples.

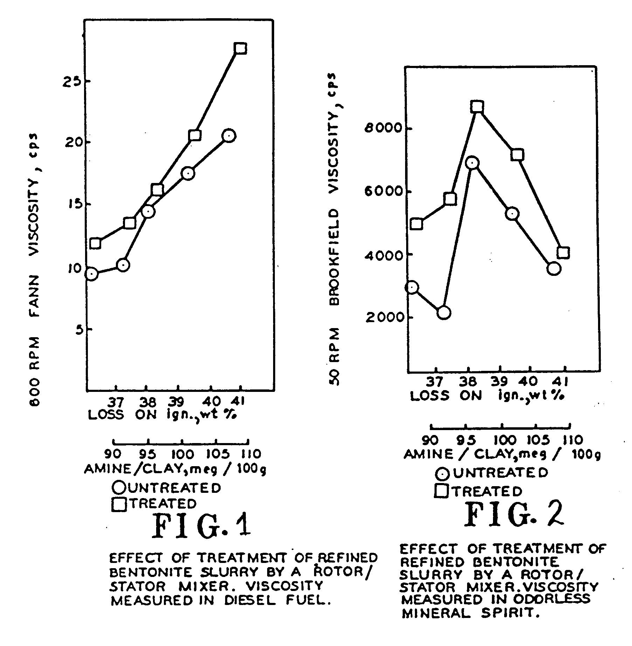

In Figure 1, Fann viscosity in cps is plotted as a function of milliequivalents of the amine added to the clay for the untreated bentonite samples, i.e., the prior art samples, and for the sample treated in accordance with the invention. (Loss on ignition is also plotted as abscissa, which is a measure of the organic combined with the clay). Viscosity measurements were effected by measuring a quantity of diesel oil into a multi-mixer can. In each instance, the sample to be evaluated was added to the diesel oil with stirring, after which water was stirred into the mix, the can removed from the mixer, and placed on the Fann viscometer, and the 600 and 300 rpm readings obtained. Gel readings were obtained after 10 seconds. The results show a good improvement where the process of the invention is used.

### EXAMPLE II

In this instance, the same procedure was utilised as in Example 1, except that the effects of the invention on the gellant were evaluated by admixing same with odorless mineral spirits (OMS). In the said procedure, a fixed quantity of the odorless mineral spirits was transferred to a container and the temperature is established for same. A small quantity of 100% propylene carbonate was added, while stirring. Next, a specified quantity of the sample to be evaluated was transferred to the container, followed by vigorous stirring. The mixture was blunged with a Cowles blade for two minutes and the gel stirred for 10 revolutions with a spatula. The container was covered and the gel allowed to remain in a constant temperature bath at 24°C, + or -1°C for two hours, after which the gel viscosity was measured on a Brookfield viscometer. The resulting data is plotted in Figure 2, and again it is seen that the invention results in marked improvements.

## Claims

1. A process for the manufacture of an organoclay having enhanced gelling properties comprising reacting a smectite-type clay with a higher alkyl-containing quaternary ammonium compound, characterised in that the clay is initially dispersed in water at less than 10% solids, screened and centrifuged to remove non-clay components, and in that the resulting clay slurry is subjected to high speed fluid shear as a pumpable slurry prior to said reaction thereof with said ammonium compound by passing the slurry through a narrow gap defined between the stator and rotor of a dispersion mill, the rotor being rotated at a high speed with respect to the stator and the slurry being subjected to shearing forces in at least the gap between the stator and rotor.

2. A process according to Claim 1, wherein the smectite-type clay has a cation exchange capacity of at least 75 milliequivalents per 100 grams of clay.

3. A process according to Claim 1 or 2, wherein the stator is stationary and vertically surrounds the rotor which rotates within the stator.

## Patentansprüche

1. Verfahren zum Herstellen eines Organotons mit vergrößerten Gelierungseigenschaften, welches aus der Reaktion eines Smectit-Tons mit einer ein höheres Alkyl enthaltenden quaternären Ammoniumverbindung besteht, dadurch gekennzeichnet, daß der Ton anfangs in Wasser mit weniger als 10 % Feststoffen dispergiert wird, die zur Entfernung von tonfreien Komponenten gesiebt und zentrifugiert sind, und daß die erhaltene Tonaufschlämmung als eine pumpfähige Aufschlämmung einem Fluidscheren unter hoher Drehzahl unterworfen wird vor deren Reaktion mit der Ammoniumverbindung durch ein Passieren der Aufschlämmung durch einen engen Spalt hindurch, der zwischen dem Stator und dem Rotor einer Dispersionsmühle ausgebildet ist, wobei der Rotor mit einer hohen Drehzahl in Bezug auf den Stator gedreht und die Aufschlämmung den Scherkräften wenigstens in dem Spalt zwischen dem Stator und dem Rotor ausgesetzt wird.

2. Verfahren nach Anspruch 1, bei welchem der Smectit-Ton ein Kation-Austauschvermögen von wenigstens 75 Milliäquivalenten je 100 Gramm Ton hat.

3. Verfahren nach Anspruch 1 oder 2, bei welchem der Stator stationär ist und den Rotor vertikal umgibt, der innerhalb des Stators dreht.

## Revendications

1. Procédé de fabrication d'organoargiles à propriétés gélifiantes élevées comprenant la réaction d'une argile de type smectite avec un composé d'ammonium quaternaire contenant des alkyles supérieurs, caractérisé en ce que l'argile est initialement dispersée dans l'eau à moins de 10% de solides, filtrée et centrifugée pour éliminer les composants non-argileux, et en ce que la suspension d'argile obtenue est soumise, en tant que suspension pompable, à un cisaillement du fluide à vitesse élevée, ceci avant ladite réaction de cette suspension avec lesdits composés d'ammonium, en passant la suspension à travers un espace étroit défini entre le stator et le rotor du broyeur de dispersion, le rotor tournant à une vitesse élevée par rapport au stator, et la suspension étant soumise aux contraintes de cisaillement au moins dans l'espace étroit situé entre le stator et le rotor.

2. Procédé, selon la revendication 1, dans lequel l'argile de type smectite possède une capacité d'échange d'ions d'au moins 75 milliéquivalents par 100 grammes d'argile.

3. Procédé, selon la revendication 1 ou la revendication 2, dans lequel le stator est stationnaire et entoure verticalement le rotor tournant à l'intérieur du stator.
